# EUROPÄISCHE PATENTSCHRIFT

(11) **EP 3 034 371 B1**
(45) Veröffentlichungstag und Bekanntmachung des Hinweises auf die Patenterteilung: **14.04.2021**
(21) Anmeldenummer: 15194206.7
(22) Anmeldetag: 12.11.2015
(51) Int. Cl.: B60W 20/00, B60W 40/00, B60W 50/14, B60L 3/12, B60W 20/15, B60K 35/00, B60L 1/00, B60L 58/12, B60W 50/00

(54) **VERFAHREN UND VORRICHTUNG ZUM PROGNOSTIZIEREN EINER REICHWEITE EINES FAHRZEUGS MIT ZUMINDEST TEILWEISE ELEKTRISCHEM ANTRIEB**
METHOD AND DEVICE FOR PROGNOSTICATING A RANGE OF A VEHICLE WHICH IS AT LEAST PARTIALLY ELECTRICALLY DRIVEN
PROCEDE ET DISPOSITIF DE PRONOSTIC D'UN RAYON D'ACTION D'UN VEHICULE COMPRENANT AU MOINS PARTIELLEMENT UN MOTEUR ELECTRIQUE

(30) Priorität: 16.12.2014 DE 102014226031
(43) Veröffentlichungstag der Anmeldung: 22.06.2016
(73) Patentinhaber: Volkswagen Aktiengesellschaft, 38440 Wolfsburg (DE)
(72) Erfinder: TABANOGLU, Gökahn, 10627 Berlin (DE); VUJASINOVIC, Mirko, 38446 Wolfsburg (DE)

(56) Entgegenhaltungen:
- EP-A1- 2 385 349
- US-A1- 2010 138 142
- US-A1- 2011 313 610
- US-A1- 2012 262 104
- US-A1- 2014 214 267

## Beschreibung

Die vorliegende Erfindung betrifft ein Verfahren und eine Vorrichtung zum Prognostizieren einer Reichweite eines Fahrzeugs mit zumindest teilweise elektrischem Antrieb.

Elektrisch angetriebene Fahrzeuge, z.B. Personenkraftwagen oder Lastkraftwagen, umfassen üblicherweise ein Speicherelement zum Speichern elektrischer Energie, wie beispielsweise einen wieder aufladbaren Akkumulator. Da sich beim Bremsen die überschüssige kinetische Energie des Fahrzeugs je nach Situation teilweise in elektrische Energie zurückgewinnen lässt, die dann unmittelbar für einen darauffolgenden Beschleunigungsvorgang wieder zur Verfügung steht, kann der Energieverbrauch und die Reichweite durch die Fahrweise und die Art der Energierückgewinnung beeinflusst werden.

Es ist allgemein wünschenswert, dem Fahrer bei Fahrtantritt und während der Fahrt Informationen über die Betriebsmittelvorräte des Fahrzeugs bereitzustellen und derart anzuzeigen, dass er sie intuitiv erfassen kann. Insbesondere ist es in der Frühphase der Elektromobilität wünschenswert, dem Fahrer sehr präzise Informationen über die zu erwartende Reichweite seines Fahrzeugs bereitzustellen. Zum einen liegen die Reichweiten solcher Fahrzeuge derzeit noch deutlich unterhalb der Reichweiten von Fahrzeugen mit Verbrennungsmotor. Andererseits ist die derzeit noch wenig flächendeckende Versorgung mit entsprechenden Ladestationen für die Fahrzeugbatterie bei Fahrtantritt zu bedenken, so dass die Reichweite eines Elektrofahrzeugs und Parameter, die Einfluss auf die Reichweite haben, für den Fahrer wichtige Informationen darstellen, die im Fahrzeug angezeigt werden sollten.

Aus der DE 10 2010 038 539 A1 ist ein Verbrauchsanzeigesystem für ein Fahrzeug bekannt. Dieses System umfasst ein Display zum Darstellen von Verbrauchsinformationen und Mittel zum Erfassen des aktuellen Energieverbrauchs des Fahrzeugs. Eine Recheneinheit erzeugt Verbrauchsinformationen in Abhängigkeit von dem erfassten Energieverbrauch und zeigt diese Informationen auf dem Display an. Ferner ist mit der Recheneinheit ein Navigationssystem verbunden. Die Recheneinheit speichert ein durch das Navigationssystem erfasstes Start- und Zielpunkt-Paar sowie die jeweils gefahrene Strecke und mindestens einen zwischen Start- und Zielpunkt erfassten Verbrauchswert. Dieser Verbrauchswert wird bei Bedarf auf dem Display angezeigt.

Aus der DE 10 2011 001 011 A1 ist ein Kraftfahrzeug bekannt, bei welchem bei rein elektrischer Fahrt mindestens ein Nebenaggregat des Kraftfahrzeugs abhängig von einer fahrerseitigen Betätigung eines Bedienelements in seiner elektrischen Leistungsaufnahme reduziert oder komplett abgeschaltet werden kann, um so bei rein elektrischer Fahrt die elektrische Reichweite des Kraftfahrzeugs zu erhöhen. Das Fahrzeug kann ferner eine Überwachungseinrichtung für den Ladezustand eines elektrischen Energiespeichers aufweisen. Diese Überwachungseinrichtung kann auf Basis der elektrischen Leistungsaufnahme ein Nebenaggregat in seiner Leistungsaufnahme reduzieren oder es komplett abschalten. Die hierdurch erzielte Reichweitenerhöhung wird dem Fahrer angezeigt.

Aus der DE 10 2011 113 715 A1 ist ein Verfahren bekannt, bei welchem aus fahrzeug- und fahrstreckenbezogenen Informationen eine für das Fortbewegen des Fahrzeugs vorhandene Energiebevorratungsmenge erfasst wird, eine Reichweite aufgrund der vorhandenen Energiebevorratungsmenge über eine Zuordnungsvorschrift ermittelt wird und ein Klimazustand erfasst wird, wobei dieser bei der Ermittlung der Reichweite berücksichtigt wird.

Aus der WO 2012/048766 ist ein Verfahren zum Ermitteln der Reichweite eines Kraftfahrzeugs bekannt. Dabei werden beim Ermitteln der Reichweite eines Kraftfahrzeugs klimatische Umgebungsbedingungen und die Temperatur oder der physikalische/chemische Zustand zumindest einer vorbestimmten Komponente des Kraftfahrzeugs berücksichtigt. Dabei kann eine Reichweitenbestimmung bereits vor Fahrtantritt durchgeführt werden.

Weiterhin ist aus der US 2011/0313610 A1 ein Verfahren bekannt, mittels welchem die Reichweite anhand zusätzlicher Ladezeiten für ein Fahrzeug prognostiziert werden kann. Dabei wird ein Ladezustand eines Energiespeichers ermittelt, geographische und Straßenkartendaten ermittelt und ein historischer Durchschnittswert einer Entfernung, welche das Fahrzeug mit dem ermittelten Ladezustand zurückgelegt hat. Unterschiedliche Reichweiten werden dann anhand zusätzlicher Lademengen, die dem Fahrzeug während eines Ladevorgangs zugeführt werden können, prognostiziert.

Schließlich ist aus der US 2012/0262104 A1 ein Verfahren bekannt, bei dem eine momentan vorhandenen Lademenge eines Fahrzeugs mittels eines mobilen Endgerätes von dem Fahrzeug abgerufen werden kann. Verliert das mobile Endgerät die Verbindung zum Fahrzeug, wird die zuletzt bekannte Lademenge des Fahrzeugs verwendet, um zu bestimmen, ob ein nächstes Navigationsziel erreicht werden kann. Weiterhin kann das Fahrzeug mittels Solarzellen aufgeladen werden. Die Lademenge des Fahrzeugs kann für einen solchen Fall prognostiziert werden.

Der vorliegenden Erfindung liegt die Aufgabe zugrunde, ein Verfahren und ein Vorrichtung bereitzustellen, mittels welcher zu jedem Zeitpunkt eine zuverlässige Reichweitenbestimmung eines Fahrzeugs bereitgestellt werden kann.

Diese Aufgabe wird erfindungsgemäß durch ein Verfahren mit den Merkmalen des Anspruchs 1 und einer Vorrichtung mit den Merkmalen des Anspruchs 13 gelöst. Vorteilhafte Aus- und Weiterbildungen ergeben sich aus den abhängigen Ansprüchen.

Bei dem erfindungsgemäßen Verfahren wird erfasst, wenn zu einem Zeitpunkt ein erster Betriebsmodus des Fahrzeugs beendet wird, wobei das Fahrzeug bei Beendigung des ersten Betriebsmodus in einen zweiten Betriebsmodus wechselt. Die Reichweite des Fahrzeugs bei Beendigung des ersten Betriebsmodus wird ermittelt. Das erfindungsgemäße Verfahren ist dadurch gekennzeichnet, dass sich das Fahrzeug im ersten Betriebsmodus in einem Fahrmodus und im zweiten Betriebsmodus in einem Ruhemodus befindet. Es wird ab dem Zeitpunkt der Beendigung des Fahrmodus die zeitliche Entwicklung eines Parameters aus der Umgebung des Fahrzeugs für eine bestimmte Dauer ermittelt, wobei sich das Fahrzeug während der bestimmten Dauer zumindest teilweise in dem Ruhemodus befindet. In Abhängigkeit von der Reichweite bei Beendigung des Fahrmodus und der zeitlichen Entwicklung des Parameters wird die zeitliche Entwicklung der Reichweite für die bestimmte Dauer prognostiziert. Die zeitliche Entwicklung der Reichweite wird ausgegeben. Insbesondere wird unter dem ersten Betriebsmodus ein Modus verstanden, in welchem der Motor des Fahrzeugs eingeschaltet ist. Der zweite Betriebsmodus ist ein Modus, in welchem der Motor des Fahrzeugs ausgeschaltet ist.

Durch das erfindungsgemäße Verfahren wird dem Nutzer vorteilhafterweise eine Reichweitenprognose auch während einer Ruhephase des Fahrzeugs, insbesondere einer Standphase, ausgegeben. In der Regel wird die Reichweite eines Fahrzeugs lediglich für die Dauer der Fahrt prognostiziert. Am Ende der Fahrt wird dann eine Restreichweite des Fahrzeugs ausgegeben, wie sie zu den zu dem Zeitpunkt des Fahrtendes vorliegenden Bedingungen erreichbar ist. Die Reichweite eines Fahrzeugs ist von unterschiedlichen Parametern abhängig. Verändern sich diese während der Standphase des Fahrzeugs, so verändert sich auch die Reichweite des Fahrzeugs. Kehrt der Nutzer also nach einer gewissen Zeit wieder zum Fahrzeug zurück, findet er eine andere Reichweite vor als sie beim vorherigen Fahrtende prognostiziert wurde. Eine zuverlässige Planung für zukünftige Fahrten ist daher nicht möglich. Durch die Prognose der zeitlichen Entwicklung der Reichweite in Abhängigkeit von einem Parameter aus der Umgebung des Fahrzeugs kann der Nutzer die Reichweite, die er bei einem erneuten Fahrtantritt vorfindet, besser einschätzen und dadurch seine zukünftigen Fahrten besser planen. In einer Ausgestaltung des Verfahrens wird ein weiterer Zeitpunkt ermittelt, zu dem voraussichtlich von dem zweiten Betriebsmodus in den ersten Betriebsmodus gewechselt wird, und der weitere Zeitpunkt wird ausgegeben. Dabei stellt der weitere Zeitpunkt den Zeitpunkt eines erneuten Fahrtbeginns dar. Dadurch kann der Nutzer bei einer Ausgabe der zeitlichen Entwicklung der Reichweite über einen längeren Zeitraum die prognostizierte Reichweite bei einem erneuten Fahrtantritt genauer einschätzen. Der Nutzer kann insbesondere den weiteren Zeitpunkt selbst einstellen. Alternativ kann der weitere Zeitpunkt aus einer Fahrhistorie des Fahrzeugs ermittelt werden. Dabei wird beispielsweise über einen längeren Zeitraum erfasst, zu welchen Uhrzeiten der Nutzer das Fahrzeug verwendet, und darüber wird der weitere Zeitpunkt geschätzt.

Insbesondere umfasst der Parameter Wetterbedingungen in der Umgebung des Fahrzeugs. Als zeitliche Entwicklung wird eine Wetterprognose für die bestimmte Dauer ermittelt. Dabei kann die Wetterprognose automatisch über ein Netzwerk eingeholt und für die Prognose verwendet werden. Wetterbedingungen sind dabei von besonderem Interesse, denn insbesondere in Standphasen, in welchen das Fahrzeug in der Regel nicht eingeschaltet ist, üben diese den größten Einfluss auf die Reichweitenprognose während der Standphase aus. Insbesondere die Außentemperatur hat einen großen Einfluss auf die zeitliche Entwicklung der Reichweite. Die Energie, welche für die Klimatisierung des Fahrzeugs aufgewendet werden muss, ist insbesondere von der Außentemperatur abhängig. Die Energiemenge, die benötigt wird, um die Innentemperatur auf einen gewünschten Wert zu bringen, ist umso höher, je mehr die Außentemperatur und die gewünschte Innentemperatur voneinander abweichen.

Insbesondere wird die Position des Fahrzeugs ermittelt und die Wetterprognose für die Position des Fahrzeugs ermittelt. Dadurch kann die Prognose der Reichweite verbessert werden. Die Wahrscheinlichkeit, dass Wetterschwankungen, die sich auch innerhalb weniger Kilometer ergeben können, die Prognose beeinflussen, kann dadurch verringert werden. Die Position des Fahrzeugs kann dabei insbesondere über Satellitennavigation, wie z. B. GPS, ermittelt werden.

In einer weiteren Ausgestaltung wird ermittelt, ob ein Energiespeicher des Fahrzeugs während des zweiten Betriebsmodus aufgeladen wird. Wenn der Energiespeicher aufgeladen wird, wird die zeitliche Entwicklung des Ladezustands des Energiespeichers prognostiziert und in der Prognose der zeitlichen Entwicklung der Reichweite berücksichtigt. Wird beispielsweise das Fahrzeug während des zweiten Betriebsmodus aufgeladen, hat dies einen großen Einfluss auf die Reichweite des Fahrzeugs bei einem erneuten Fahrtbeginn. Dies muss daher bei der Prognose der zeitlichen Entwicklung berücksichtigt werden.

In einer anderen Ausgestaltung wird eine Soll-Energiemenge ermittelt, welche der Energiespeicher des Fahrzeugs zu dem weiteren Zeitpunkt aufweisen soll. Es wird ein Soll-Zeitpunkt ermittelt, zu welchem ein Ladevorgang zum Laden des Energiespeichers gestartet werden muss, um die Soll-Energiemenge zu dem weiteren Zeitpunkt bereitzustellen. Der Soll-Zeitpunkt wird ausgegeben. Dadurch kann der Nutzer vorteilhafterweise selbst bestimmen, welchen Ladezustand der Energiespeicher bei einem erneuten Fahrtbeginn aufweisen soll. Insbesondere kann eine vollständige Ladung einer Fahrzeugbatterie aus Kostengründen nicht erwünscht sein. Um dann zum Zeitpunkt des erneuten Fahrtbeginns den gewünschten Ladezustand der Batterie vorweisen zu können, wird ein Soll-Zeitpunkt berechnet, zu welchem der Ladevorgang gestartet werden muss, um die gewünschte Soll-Energiemenge bei einem erneuten Fahrtbeginn bereitstellen zu können.

In einer weiteren Ausgestaltung ist die zeitliche Auflösung der bestimmten Dauer abhängig von der zeitlichen Auflösung des Parameters. Die zeitliche Auflösung einer Wetterprognose ist in der Regel beschränkt und liegt bei einer bis mehreren Stunden oder Tage. Dies bedeutet, dass jeder Zeitpunkt innerhalb der zeitlichen Entwicklung des Parameters ebenfalls eine bestimmte Dauer aufweist.

Weiterhin kann auf einer Anzeigefläche eine graphische Darstellung erzeugt werden, mittels welcher die zeitliche Entwicklung der Reichweite ausgegeben wird. Insbesondere umfasst die graphische Darstellung ein Diagramm, bevorzugt ein Balkendiagramm, wobei auf einer ersten Achse die bestimmte Dauer und auf einer zweiten Achse die prognostizierte Reichweite aufgetragen ist. Dabei wird die prognostizierte Reichweite mittels des Diagramms, insbesondere mittels einer Länge der Balken des Balkendiagramms, ausgegeben. Dies stellt vorteilhafterweise ein besonders intuitive und einfache Darstellungsweise der Reichweite dar. Insbesondere ergibt sich durch die Balkendarstellung eine eingängige Darstellungsart der Reichweite, bei der die Längen der Balken eine einfach zu verstehende Anzeige für die prognostizierte Reichweite zu jedem Zeitpunkt während der prognostizierten zeitlichen Entwicklung darstellt.

Beispielsweise weist die zeitliche Auflösung des Parameters die Einheit Stunden auf. Die bestimmte Dauer umfasst beispielsweise 24 Stunden und auf der ersten Achse werden Uhrzeiten mit einem Abstand von jeweils einer Stunde zwischen zwei aufeinanderfolgenden Uhrzeiten aufgetragen. Eine stündliche Auflösung ist ausreichend, um eine zufriedenstellende Auflösung der zeitlichen Entwicklung der Reichweite bereitstellen zu können. Zudem wird eine Wetterprognose in der Regel nicht besser zeitlich aufgelöst getroffen.

Weiterhin kann das graphische Diagramm für jeden ausgegebenen Zeitpunkt ein graphisches Element aufweisen. Dabei sind die ausgegebenen Zeitpunkte insbesondere der weitere Zeitpunkt und der Soll-Zeitpunkt. Der erste Zeitpunkt wird indirekt über die erste Uhrzeit auf der ersten Achse des Diagramms ausgegeben. Dadurch wird dem Nutzer vorteilhafterweise in der graphischen Darstellung verdeutlicht, wann ein Ladevorgang beginnt und wann ein nächster Fahrtbeginn geplant ist.

Zudem kann ein Zeitpunkt ermittelt werden, zu dem eine Vorklimatisierung gestartet werden soll. Eine Vorklimatisierung wird in der Regel für ca. 15 Minuten vor Fahrtbeginn eingestellt. Nach 15 Minuten Vorklimatisierung findet der Nutzer in der Regel die von ihm gewünschten Klimabedingungen im Fahrzeug vor. Die Vorklimatisierung kann beispielsweise immer 15 Minuten vor geplanten Fahrtbeginn aktiviert werden. Alternativ kann der Nutzer den Zeitpunkt, zu welchem eine Vorklimatisierung gestartet werden soll, selbst eingeben. Dazu kann ebenso ein graphisches Element für den Zeitpunkt der Vorklimatisierung auf der Anzeigefläche angezeigt werden.

In einer weiteren Ausgestaltung ist zumindest eines der graphischen Elemente in dem Diagramm entlang der ersten Achse verschiebbar, so dass der Zeitpunkt mittels Verschieben des graphischen Elements einstellbar ist. Der Nutzer kann dadurch vorteilhafterweise auf einfache und intuitive Weise den gewünschten Zeitpunkt manuell einstellen.

Insbesondere ist die Anzeigefläche, auf welcher die zeitliche Entwicklung der Reichweite ausgegeben wird, nicht in dem Fahrzeug selbst angeordnet. Beispielsweise wird die zeitliche Entwicklung über eine Anzeigefläche eines Mobiltelefons, Tablet-Computers, PCs oder sonstigen Geräten mit Anzeigeflächen ausgegeben. Dadurch muss der Nutzer zum Einstellen der Zeitpunkte oder zum Ausgeben der zeitlichen Entwicklung der Reichweite nicht zum Fahrzeug zurückkehren, um Einstellungen zu ändern bzw. sich die zeitliche Entwicklung der Reichweite anzusehen.

Ferner betrifft die Erfindung eine Vorrichtung zum Prognostizieren einer Reichweite eines Fahrzeugs mit zumindest teilweise elektrischem Antrieb. Die Vorrichtung umfasst eine Erfassungseinheit, mittels welcher erfassbar ist, wenn zu einem Zeitpunkt ein erster Betriebsmodus des Fahrzeugs beendet wird, wobei das Fahrzeug bei Beendigung des ersten Betriebsmodus in einen zweiten Betriebsmodus wechselt. Die erfindungsgemäße Vorrichtung ist dadurch gekennzeichnet, dass sich das Fahrzeug im ersten Betriebsmodus in einem Fahrzeug und im zweiten Betriebsmodus in einem Ruhemodus befindet. Mittels einer Ermittlungseinheit, ist die Reichweite des Fahrzeugs bei Beendigung des Fahrmodus und ab dem Zeitpunkt der Beendigung des ersten Betriebsmodus die zeitliche Entwicklung eines Parameters aus der Umgebung des Fahrzeugs für eine bestimmte Dauer ermittelbar, wobei sich das Fahrzeug (7) während der bestimmten Dauer (t) zumindest teilweise in dem Ruhemodus befindet. Zudem ist mittels einer Prognoseeinheit in Abhängigkeit von der Reichweite bei Beendigung des Fahrmodus und der zeitlichen Entwicklung des Parameters die zeitliche Entwicklung der Reichweite für die bestimmte Dauer prognostizierbar . Mittels einer Ausgabeeinheit ist die prognostizierte zeitliche Entwicklung der Reichweite ausgebbar. Die erfindungsgemäße Vorrichtung ist insbesondere zum Ausführen des erfindungsgemäßen Verfahrens geeignet und weist daher alle Vorteile des erfindungsgemäßen Verfahrens auf.

Ferner betrifft die Erfindung ein Fahrzeug mit einer solchen Vorrichtung. Bei dem Fahrzeug handelt es sich insbesondere um ein Fahrzeug mit vollständigem elektrischem Antrieb, beispielsweise um ein Elektrofahrzeug, oder um ein Fahrzeug mit teilweise elektrischem Antrieb, also beispielsweise um ein Hybridfahrzeug. Bei einem Hybridfahrzeug setzt sich die gesamte Reichweite des Fahrzeugs aus der elektrischen Reichweite, also der Reichweite die mit der in der Traktionsbatterie des Fahrzeugs vorhandenen Energiemenge erreicht werden kann, und und der herkömmlichen Reichweite zusammen, also der Reichweite, die durch die in einem herkömmlichen Tank vorhandenen Brennstoffmenge, die einem Verbrennungsmotor zur Verfügung steht, erreicht werden kann. Wird ein Hybridfahrzeug betrieben, wird das Fahrzeug zunächst mit elektrischer Energie aus der Traktionsbatterie angetrieben. Ein Verbrennungsmotor wird erst dann verwendet, wenn die Energie aus der Traktionsbatterie nicht mehr zum Antrieb des Fahrzeugs ausreicht. Bei einem Hybridfahrzeug ist für den Nutzer insbesondere die elektrisehe Reichweite von Interesse. Durch das erfindungsgemäße Verfahren wird daher bei einem Hybridfahrzeug insbesondere die elektrische Reichweite prognostiziert und dem Nutzer ausgegeben.

Die Erfindung wird nun anhand von Ausführungsbeispielen mit Bezug zu den beigefügten Zeichnungen erläutert.
- Fig. 1: zeigt ein erstes Ausführungsbeispiel der erfindungsgemäßen Vorrichtung,
- Fig. 2: zeigt ein Anordnungsbeispiel des ersten Ausführungsbeispiels der erfindungsgemäßen Vorrichtung in einem Fahrzeug,
- Fig. 3: zeigt ein zweites Ausführungsbeispiel der erfindungsgemäßen Vorrichtung,
- Fig. 4: zeigt ein Flussdiagramm eines Ausführungsbeispiels des erfindungsgemäßen Verfahrens,
- Fig. 5: zeigt eine Anzeige, wie sie von dem erfindungsgemäßen Verfahren auf einer Anzeigefläche erzeugbar ist, und
- Fig. 6a bis 6c: zeigen Ausführungsbeispiele zum Einstellen verschiedener Zeitpunkte für das erfindungsgemäße Verfahren.

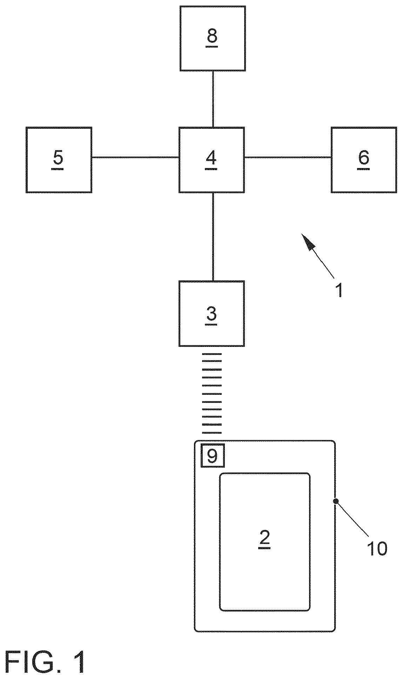

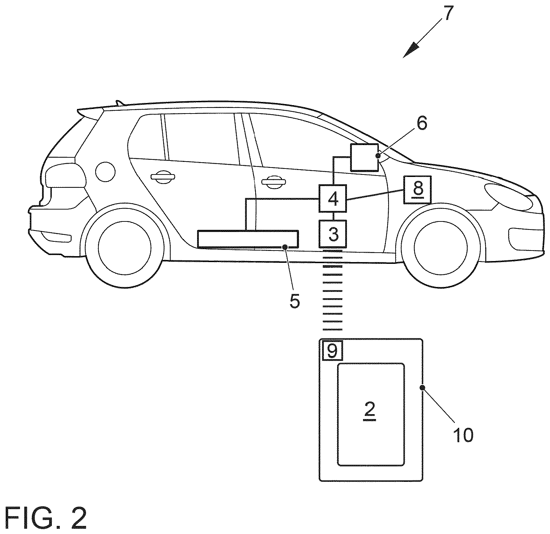

Mit Bezug zu den Figuren 1 und 2 wird ein erstes Ausführungsbeispiel der erfindungsgemäßen Vorrichtung 1 sowie eine Anordnung der Vorrichtung 1 in einem Fahrzeug 7 erläutert.

Die Vorrichtung 1 umfasst zunächst eine Erfassungseinheit 8, mittels welcher erfassbar ist, wenn das Fahrzeug 7 von einem ersten Betriebsmodus in einen zweiten Betriebsmodus wechselt.

Der erste Betriebsmodus ist dabei ein Fahrmodus. Insbesondere wird unter dem ersten Betriebsmodus ein Modus verstanden, in welchem der Motor des Fahrzeugs 7 eingeschaltet ist. Der zweite Betriebsmodus ist ein Ruhemodus des Fahrzeugs 7. Insbesondere ist der zweite Betriebsmodus ein Modus, in welchem der Motor des Fahrzeugs 7 ausgeschaltet ist. Die Erfassungseinheit 8 erfasst somit, wenn der Motor des Fahrzeugs 7 ausgeschaltet wird.

Zudem umfasst die Vorrichtung 1 eine Ermittlungseinheit 4. Die Ermittlungseinheit 4 ist dabei zur Ermittlung unterschiedlicher Parameter ausgestaltet. Zunächst ermittelt die Ermittlungseinheit 4, welche Reichweite das Fahrzeug 7 bei Beendigung des Fahrmodus aufweist. Dazu ermittelt die Ermittlungseinheit 4 insbesondere den Ladezustand eines Energiespeichers 5, beispielsweise einer Traktionsbatterie, zum Zeitpunkt der Beendigung des Fahrmodus und berechnet daraus die Reichweite.

Zudem ermittelt die Ermittlungseinheit 4, beispielsweise über ein Netzwerk 6, die zeitliche Entwicklung des Wetters in der Umgebung des Fahrzeugs 7. Das Wetter entspricht dabei einem Parameter, der einen Einfluss auf die Reichweitenprognose während einer Ruhephase des Fahrzeugs 7 hat.

Die von der Ermittlungseinheit 4 ermittelten Parameter werden an eine Prognoseeinheit 3 übermittelt. In der Prognoseeinheit 3 wird dann die zeitliche Entwicklung der Reichweite aus den entsprechenden Parametern prognostiziert.

Die prognostizierte zeitliche Entwicklung der Reichweite wird an eine Steuervorrichtung 9, welche in einem Mobiltelefon 10 des Nutzers angeordnet ist, übermittelt. Die Steuervorrichtung 9 erzeugt dann auf der Anzeigefläche 2 des Mobiltelefons 10 des Nutzers eine graphische Darstellung zur Visualisierung der zeitlichen Entwicklung der Reichweite.

Im ersten Ausführungsbeispiel der erfindungsgemäßen Vorrichtung 1, ist die Mehrzahl der Vorrichtungskomponenten in dem Fahrzeug 7 selbst angeordnet.

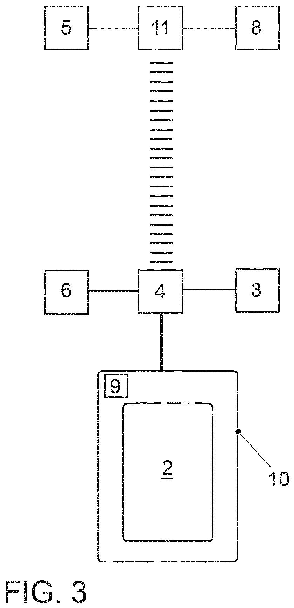

Bei dem in Figur 3 gezeigten zweiten Ausführungsbeispiel sind die Ermittlungseinheit 4 und die Prognoseeinheit 3 direkt im oder am Mobiltelefon 10 des Nutzers angeordnet. Das Mobiltelefon 10 ist mit dem Netzwerk 6, aus welchem die Ermittlungseinheit 4 die Wetterprognose bezieht, gekoppelt.

Insbesondere verfügt das Mobiltelefon 10 des Nutzers über eine Anwendung, welche extra für die Reichweitenprognose entwickelt worden ist. Die Traktionsbatterie 5 und die Erfassungseinheit 8 sind weiterhin im Fahrzeug 7 angeordnet. Zudem weist die Vorrichtung 1 des zweiten Ausführungsbeispiels eine weitere Ermittlungseinheit 11 auf, welche mit der Ermittlungseinheit 4 gekoppelt ist, so dass die Ermittlungseinheit 4 mittels der Ermittlungseinheit 11 Informationen über die Reichweite und den Ladezustand der Traktionsbatterie 5 erhält.

Auf der Anzeigefläche 2 des Mobiltelefons 10 kann insbesondere eine berührungsempfindliche Oberfläche angeordnet sein, mittels welcher der Nutzer Einstellungen für die Prognose der zeitlichen Entwicklung der Reichweite vornehmen kann.

Bei dem Fahrzeug 7 kann es sich entweder um ein Elektrofahrzeug oder ein Hybridfahrzeug handeln. Beide Fahrzeugtypen weisen eine Traktionsbatterie 5 auf, aus welcher die Energie für den Antrieb des Fahrzeugs 7 gespeist wird. Bei einem Elektrofahrzeug wird dabei die Antriebsenergie nur aus der Traktionsbatterie 5 gespeist. Neigt sich die Energiemenge in der Traktionsbatterie 5 dem Ende zu, muss die Traktionsbatterie 5 wieder aufgeladen werden. Andernfalls ist ein Weiterbetrieb des Fahrzeug 7 nicht möglich.

Bei einem Hybridfahrzeug hingegen wird, wenn die Traktionsbatterie 5 ausreichend geladen ist, die Energie aus der Traktionsbatterie 5 gespeist. Ist die Traktionsbatterie 5 nicht mehr ausreichend geladen, wird die Antriebsenergie aus einem herkömmlichen Kraftstoff, beispielsweise Benzin oder Diesel, gewonnen. Somit setzt sich die gesamte Reichweite eines Hybridfahrzeugs aus der elektrischen Reichweite und einer herkömmlichen Reichweite, die durch den Antrieb mittels eines herkömmlichen Kraftstoffs erreicht werden kann, zusammen. Bei einem Hybridfahrzeug wird das erfindungsgemäße Verfahren insbesondere für die elektrische Reichweite, welche mit der in der Traktionsbatterie 5 vorhandenen Energiemenge erreicht werden kann, ausgeführt. Dadurch kann der Nutzer eines Hybridfahrzeugs vorteilhafterweise besser einschätzen, wie weit er durch rein elektrischen Antrieb noch fahren kann. Im Folgenden ist mit der Bezeichnung Reichweite insbesondere die elektrische Reichweite gemeint.

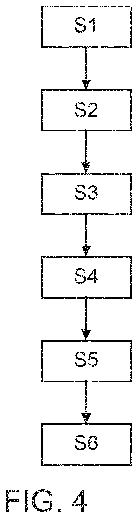

Mit Bezug zu Figur 4 wird ein Ausführungsbeispiel des erfindungsgemäßen Verfahrens erläutert.

Ausgangspunkt ist dabei, dass der Fahrer sein Fahrzeug 7 zum Parken, beispielsweise über Nacht, abstellt.

Dabei schaltet der Fahrer zunächst den Motor des Fahrzeugs 7 ab. In Schritt S1 des Verfahrens wird zunächst erfasst, dass das Fahrzeug 7 von einem Fahrmodus in einen Parkmodus wechselt.

In Schritt S2 wird die Reichweite, die mit dem momentanen Ladezustand unter den momentan vorherrschenden Wetterbedingungen erreichbar ist, ermittelt.

In Schritt S3 ermittelt die Ermittlungseinheit 4 die Position des Fahrzeugs 7. Dies geschieht beispielsweise über ein Navigationssystem mit integriertem GPS-Empfänger.

In Schritt S4 verbindet sich die Ermittlungseinheit 4 mit dem Netzwerk 6 und holt über das Netzwerk eine Wetterprognose für die nächsten 24 Stunden an der Position des Fahrzeugs 7 ein. Die Wetterprognose hat dabei eine zeitliche Auflösung mit der Einheit Stunden. Dies bedeutet, dass für jede der 24 Stunden, eine separate Wetterprognose vorliegt. Die Wetterprognose für die 24 Stunden entspricht dabei einer zeitlichen Entwicklung des Wetters innerhalb der nächsten 24 Stunden.

In Schritt S5 wird dann eine Prognose für die zeitliche Entwicklung der Reichweite innerhalb der nächsten 24 Stunden in Abhängigkeit von der zeitlichen Entwicklung der Wetterprognose erstellt.

In Schritt S6 wird die prognostizierte zeitliche Entwicklung der Reichweite auf der Anzeigefläche 2 des Mobiltelefons 10 des Nutzers ausgegeben.

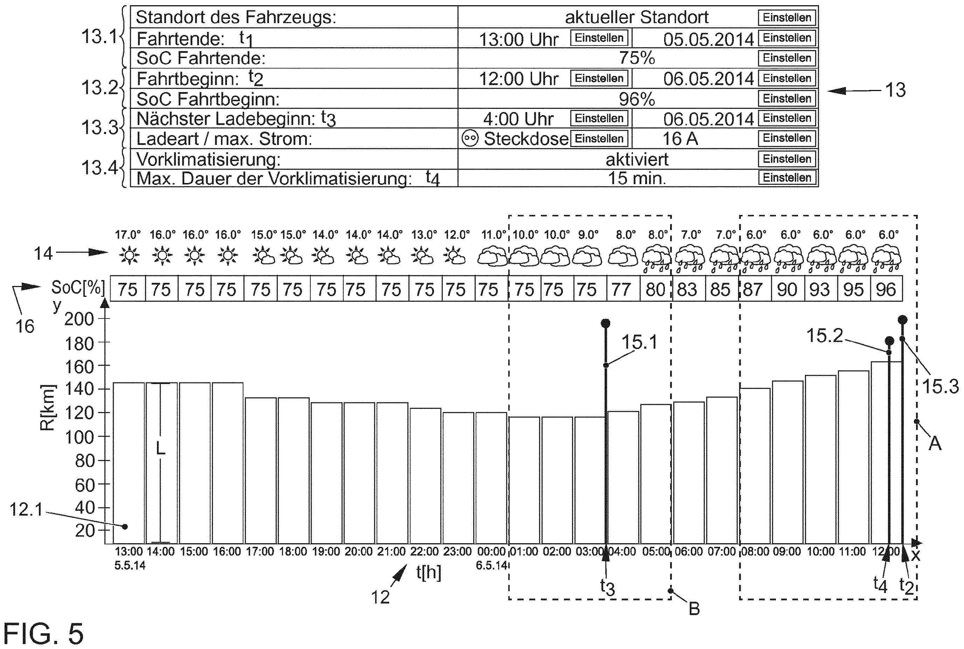

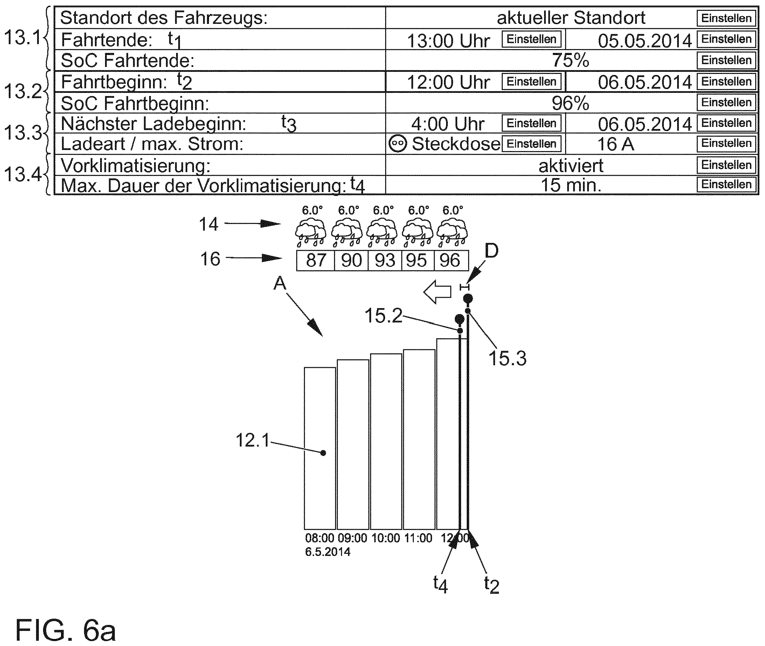

Mit Bezug zu den Figuren 5 und 6a bis 6c wird die Anzeige erläutert, welche dem Nutzer auf der Anzeigefläche 2 seines Mobiltelefons 10 angezeigt wird.

Es wird zunächst ein Balkendiagramm 12 mit einer x-Achse und einer y-Achse erzeugt. Dabei ist auf der y-Achse die Reichweite R in Kilometern und auf der x-Achse die bestimmte Dauer t in Stunden aufgetragen. Die x-Achse wird dabei insbesondere in Uhrzeiten untergliedert. Dabei liegt zwischen zwei nebeneinander aufgetragenen Uhrzeiten eine Zeitspanne von einer Stunde. Die zeitliche Auflösung der x-Achse beträgt also eine Stunde. Für jeden x-Achsenpunkt, also für jede Uhrzeit, ist in dem Balkendiagramm 12 ein Balken 12.1 aufgetragen. Jeder der Balken 12.1 weist eine gewisse Länge L auf. Die Länge L jedes Balkens 12.1 entspricht dabei der für die entsprechende Stunde prognostizierte Reichweite R.

Oberhalb des Balkendiagramms 12 wird zudem für jede Stunde ein Symbol 14 für die Wetterprognose angezeigt. Oberhalb der Symbole 14 wird zudem die zu erwartende Außentemperatur angezeigt. Zwischen dem Balkendiagramm 12 und den Symbolen 14 für die Wetterprognose wird ein Wert für den Ladezustand 16 ausgegeben. Mit sinkender Außentemperatur muss die Energie, welche für die Klimatisierung des Fahrzeugs 7 bei einer erneuten Fahrt aufgewendet werden muss, erhöht werden. Diese steht dann nicht für die Umsetzung in Reichweite R bereit. Mit sinkender Außentemperatur sinkt daher auch der prognostizierte Wert für die Reichweite R.

Zudem wird auf der Anzeigefläche 2 eine Listendarstellung 13 angezeigt. In der Listendarstellung 13 werden für die Reichweitenprognose relevante Parameter angezeigt. In den obersten drei Spalten 13.1 werden Information zur letzten durchgeführten Fahrt angezeigt. Es werden insbesondere der Standort des Fahrzeugs 7, ein Zeitpunkt t₁ des Fahrtendes sowie der Ladezustand bei Fahrtende angezeigt. Der Zeitpunkt t₁ setzt sich dabei insbesondere aus Uhrzeit und Datum zusammen.

In den Spalten 13.2 werden Informationen zum nächsten Fahrtbeginn angegeben. Beispielsweise kann der Nutzer einen Zeitpunkt t₂, zu welcher er voraussichtlich das Fahrzeug 7 wieder verwenden wird, einstellen. Alternativ kann ein nächster Fahrtbeginn über eine Historie zur Fahrzeugverwendung bestimmt werden. Zudem kann ein Ladezustand angegeben werden, den die Traktionsbatterie 5 zu Beginn der nächsten Fahrt aufweisen soll.

In den Spalten 13.3 werden Informationen zum Ladevorgang angezeigt. Bei Fahrtende kann der Nutzer das Fahrzeug 7 entweder laden oder nicht. Falls der Nutzer das Fahrzeug 7 an eine Ladestation, beispielsweise eine Steckdose anschließt, wird ihm über die Anzeige ein Soll-Zeitpunkt t₃, welcher den Beginn des eigentlichen Ladevorgangs darstellt, und ein Soll-Ladezustand, den die Traktionsbatterie 5 zu Beginn der nächsten Fahrt aufweisen soll, angezeigt. Gibt der Nutzer keinen Soll-Zeitpunkt t₃ ein, zu welchem der Ladevorgang beginnen soll, wird dieser so ermittelt, dass zum nächsten Fahrtbeginn der eingestellte Wert für den Soll-Ladezustand erreicht wird. Auch den Soll-Ladezustand kann der Nutzer selbst einstellen. Zudem wird dem Nutzer automatisch die Ladeart, über welche das Fahrzeug 7 aufgeladen wird, also beispielsweise über eine haushaltsübliche Steckdose oder über eine Ladestation, angezeigt. Auch der maximale Ladestrom wird ermittelt und ausgegeben. Wird das Fahrzeug 7 während des Ruhemodus nicht geladen, wird dem Nutzer keine Uhrzeit und kein Datum für den nächsten Ladebeginn angezeigt. Auch die Informationen zur Ladeart und zum maximalen Strom werden dann nicht angezeigt.

In den letzten beiden Spalten werden Informationen zu einer Vorklimatisierung angegeben. Solange bestimmte Bedingungen erfüllt sind, kann der Nutzer grundsätzlich einstellen, ob die Vorklimatisierung während der Ruhephase des Fahrzeugs 7 aktiviert werden soll oder nicht. Ist die Vorklimatisierung aktiviert und wird gleichzeitig das Fahrzeug 7 geladen, wird die Energie, welche für die Vorklimatisierung benötigt wird, aus der Ladeeinrichtung bezogen. Die dafür benötigte Energie geht also nicht von der Energiemenge in der Traktionsbatterie 5 ab. Zudem kann der Nutzer einstellen, wie lange vorklimatisiert werden soll. In der Regel ist eine Dauer von 15 Minuten ausreichend, um ein Fahrzeug 7 auf die bei Fahrtantritt gewünschte Innentemperatur aufzuheizen oder herabzukühlen.

In dem Balkendiagramm 12 werden bei bestimmten Zeitpunkten t₂ bis t₄ graphische Elemente 15.1 bis 15.3 angezeigt. Die Position der graphischen Elemente 15.1 bis 15.3 in dem Balkendiagramm 12 ist dabei abhängig von den Zeitpunkten t₂ bis t₄. Die graphischen Elemente 15.1 bis 15.3 weisen dabei die Form eines Stabes mit abschließendem Knauf auf. Dabei kann jedes graphische Element 15.1 bis 15.3 eine andere Farbe aufweisen. Gleichzeitig können die Spalten in der Listendarstellung 13, welche ein jeweiliges graphisches Element 15.1 bis 15.3 betreffen, in der gleichen Farbe dargestellt werden. Dadurch wird dem Nutzer die Zuordnung der graphischen Elemente 15.1 bis 15.3 zu einem Zeitpunkt erleichtert. Wird also beispielsweise das graphische Element 15.1 grün dargestellt, werden die Spalten 13.3 der Listendarstellung 13 grün hinterlegt. Wird das graphische Element 15.2 blau dargestellt, werden die zugehörigen Spalten 13.4 ebenso blau hinterlegt. Wird das graphische Element 15.3 gelb dargestellt, werden die Spalten 13.2 gelb hinterlegt. Durch dieses Farbmuster wird dem Nutzer auf einfache Art und Weise dargelegt, welches graphische Element 15.1 bis 15.3 zu welchem Zeitpunkt t₂ bis t₄ gehört.

Die Abschnitte A und B aus dem Balkendiagramm 12 der Figur 5 sind in den Figuren 6a bis 6c zur Erläuterung dazu, wie die verschiedenen Zeitpunkte t₂ bis t₄ eingestellt werden können, näher beschrieben.

Möchte der Nutzer beispielsweise den Zeitpunkt t₂ einstellen, kann er dies entweder direkt über die entsprechende Spalte, welche der oberen Spalte der Spalten 13.2 entspricht in der Listendarstellung 13 tun. Dazu berührt er die Anzeigefläche 2 bei der Spalte auf der Schaltfläche "Einstellen". Es öffnet sich dann ein Fenster, in welchem der Nutzer die gewünschte Uhrzeit einstellen kann. Alternativ kann der Nutzer auch das graphische Element 15.3, welches dem Zeitpunkt t₂ zugeordnet ist, direkt über Berühren in dem Balkendiagramm 12 auf die gewünschte Uhrzeit verschieben. Dies ist in Figur 6a gezeigt. Da dann jedoch der Zeitpunkt für eine Vorklimatisierung nach dem Zeitpunkt des Fahrtbeginns liegt, kann das graphische Element 15.2 an die Bewegung des graphischen Elements 15.3 gekoppelt sein. Das graphische Element 15.2 wird dann im gleichen Maße verschoben wie das graphische Element 15.3. Dabei wird der Abstand D zwischen den graphischen Elementen 15.2 und 15.3 beibehalten.

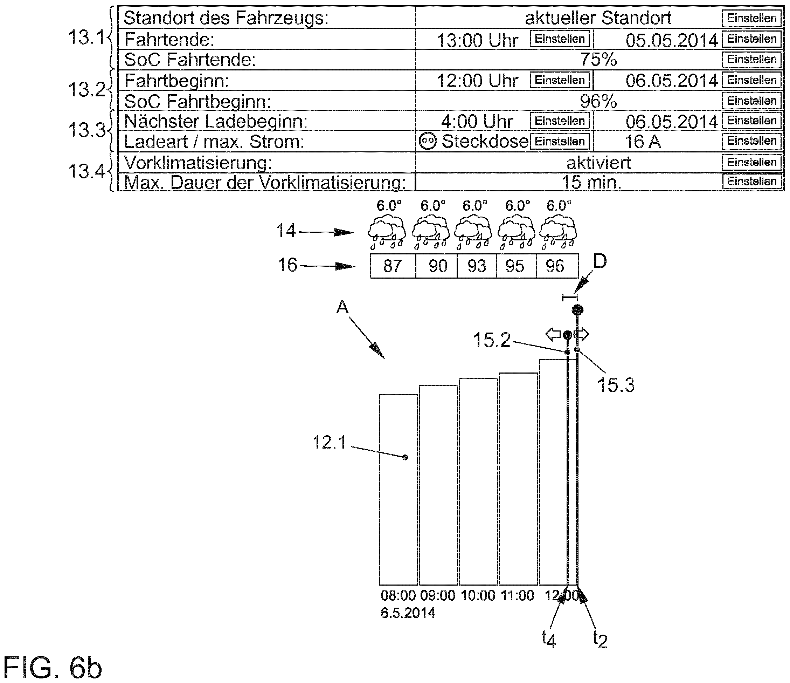

Der Abstand D kann dadurch verändert werden, dass das graphische Element 15.2 verschoben wird. Alternativ kann auch über die untere Spalte der Spalten 13.4 die Dauer für die Vorklimatisierung eingestellt werden. Dies ist in Figur 6b gezeigt.

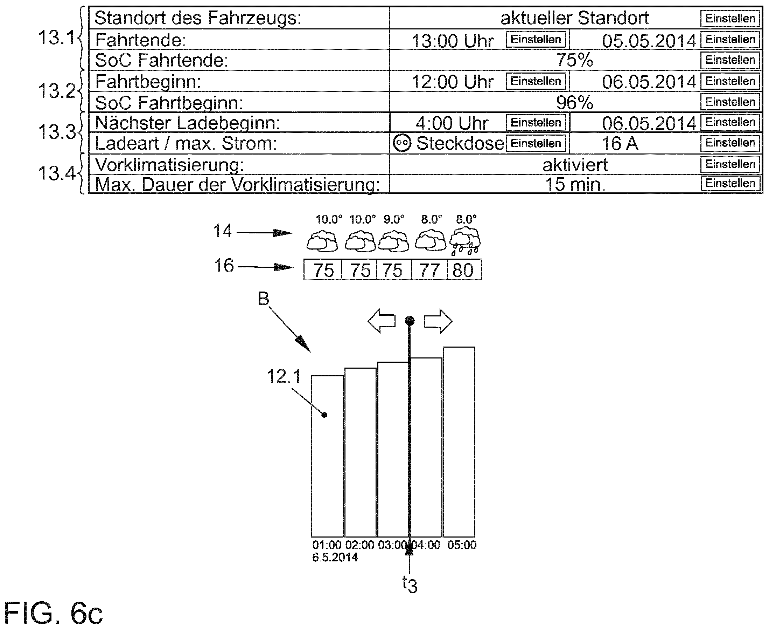

In Figur 6c ist beispielhaft ein Einstellen des Soll-Zeitpunkt t₃ gezeigt. Dabei kann wie bereits beim Einstellen der Zeitpunkte t₂ und t₄ entweder das graphische Element 15.1 aktiv vom Nutzer in dem Balkendiagramm 12 verschoben werden oder alternativ der Zeitpunkt t₃ über die entsprechende Spalte in der Listendarstellung 13 eingestellt werden.

Wird einer der Zeitpunkte t₂ bis t₄ über das entsprechende graphische Element 15.1 bis 15.3 eingestellt, wird die Anzeige in der Listendarstellung 13 automatisch entsprechend angepasst. Wird einer der Zeitpunkte t₂ bis t₄ über die Anzeige in der Listendarstellung 13 eingestellt, wird entsprechend die Position des entsprechenden graphischen Elements 15.1 bis 15.3 an den Eintrag angepasst.

Wird einer der Zeitpunkte t₂ bis t₄ vom Nutzer angepasst, insbesondere der Soll-Zeitpunkt t₃ und/oder der Zeitpunkt t₄, an welchem eine Vorklimatisierung starten soll, wird die zeitliche Entwicklung neu prognostiziert.

Wird hingegen lediglich der Zeitpunkt t₂ geändert, und wird das Fahrzeug 7 während der Ruhephase nicht geladen und ist keine Vorklimatisierung gewünscht, muss keine neue Prognose gestartet werden.

Die zeitliche Entwicklung des Wetters kann zudem ständig überprüft werden. Bei Änderungen der Wetterprognose innerhalb der bestimmten Dauer t muss auch die Prognose der zeitlichen Entwicklung der Reichweite R angepasst werden.

Die Reichweitenprognose kann automatisch generiert werden. Bei einer automatischen Generierung werden voreingestellte Einstellungen für die Prognose verwendet. Beispielsweise kann der Nutzer bevorzugte Einstellungen für die Zeitpunkte t₂ bis t4 im Fahrzeug 7 speichern. Alternativ können alle Einstellungen auch über eine Fahrhistorie ermittelt werden.

Die Reichweitenprognose kann allerdings auch manuell vom Nutzer erstellt werden. Dabei stellt der Nutzer, wie im Vorgang erläutert, alle Zeitpunkte t₂ bis t₄, einen Soll-Ladezustand der Fahrzeugbatterie 5 und eine Vorklimatisierung selbst ein.

Zudem kann die Reichweitenprognose auch halbautomatisch erfolgen. Dabei werden manche Einstellungen aus der Listendarstellung 13 übernommen und manche vom Nutzer manuell eingestellt. Beispielsweise kann ein Soll-Ladezustand immer vorgegeben werden. Dabei ist dann der vom Hersteller als optimal ausgezeichneter Ladezustand für die Traktionsbatterie 5 in der Listendarstellung 13 hinterlegt.

Bei einem Hybridfahrzeug kann dabei alternativ auch eine Darstellung der gesamten Reichweite, also die Summe aus prognostizierter elektrischer Reichweite und herkömmlicher Reichweite, dargestellt werden, wobei für die herkömmliche Reichweite keine Prognose erstellt wird. Dadurch wird dem Nutzer dann vorteilhafterweise nicht nur ein Teil der erreichbaren Reichweite angezeigt, sondern die gesamte erreichbare Reichweite des Fahrzeugs 7. Insbesondere wird dabei die elektrische Reichweite visuell von der herkömmlichen Reichweite abgehoben dargestellt, so dass der Nutzer aus der kombinierten Anzeige trotzdem die rein elektrische Reichweite ablesen kann.

### BEZUGSZEICHENLISTE

- 1: Vorrichtung
- 2: Anzeigefläche
- 3: Prognoseeinheit
- 4: Ermittlungseinheit
- 5: Energiespeicher; Traktionsbatterie
- 6: Netzwerk
- 7: Fahrzeug
- 8: Erfassungseinheit
- 9: Steuervorrichtung
- 10: Mobiltelefon
- 11: Ermittlungseinheit
- 12: Balkendiagramm
- 13: Listendarstellung
- 13.1 - 13.4: Spalten der Listendarstellung
- 14: Symbole für Wetterprognose
- 15.1 - 15.3: graphische Elemente
- 16: Ladezustand der Batterie; SoC
- x: erste Achse
- y: zweite Achse
- A; B: Abschnitte des Balkendiagramms
- R: Reichweite
- t₁: Zeitpunkt des Fahrtendes
- t₂: Zeitpunkt des Fahrtbeginns
- t₃: Soll-Zeitpunkt
- t₄: Zeitpunkt, zu dem Vorklimatisierung gestartet wird

## Patentansprüche

1. Verfahren zum Prognostizieren einer Reichweite eines Fahrzeugs (7) mit zumindest teilweise elektrischem Antrieb, bei dem
erfasst wird, wenn zu einem Zeitpunkt (t₁) ein erster Betriebsmodus des Fahrzeugs (7) beendet wird, wobei das Fahrzeug (7) bei Beendigung des ersten Betriebsmodus in einen zweiten Betriebsmodus wechselt,
die Reichweite (R) des Fahrzeugs (7) bei Beendigung des ersten Betriebsmodus ermittelt wird,
**dadurch gekennzeichnet, dass**
sich das Fahrzeug im ersten Betriebsmodus in einem Fahrmodus und im zweiten Betriebsmodus in einem Ruhemodus befindet,
ab dem Zeitpunkt (t₁) der Beendigung des Fahrmodus die zeitliche Entwicklung eines Parameters aus der Umgebung des Fahrzeugs (7) für eine bestimmte Dauer (t) ermittelt wird, wobei sich das Fahrzeug (7) während der bestimmten Dauer (t) zumindest teilweise in dem Ruhemodus befindet,
in Abhängigkeit von der Reichweite (R) bei Beendigung des Fahrmodus und der zeitlichen Entwicklung des Parameters die zeitliche Entwicklung der Reichweite (R) für die bestimmte Dauer (t) prognostiziert wird und
die zeitliche Entwicklung der Reichweite (R) ausgegeben wird.

2. Verfahren nach Anspruch 1,
**dadurch gekennzeichnet, dass**
ein weiterer Zeitpunkt (t₂) ermittelt wird, zu dem voraussichtlich von dem zweiten Betriebsmodus in den ersten Betriebsmodus gewechselt wird, und der weitere Zeitpunkt (t₂) ausgegeben wird.

3. Verfahren nach einem der Ansprüche 1 oder 2,
**dadurch gekennzeichnet, dass**
der Parameter Wetterbedingungen in der Umgebung des Fahrzeugs (7) umfasst und als zeitliche Entwicklung eine Wetterprognose für die bestimmte Dauer (t) ermittelt wird.

4. Verfahren nach Anspruch 3,
**dadurch gekennzeichnet, dass**
die Position des Fahrzeugs (7) im zweiten Betriebsmodus ermittelt wird und die Wetterprognose für die Position des Fahrzeugs (7) ermittelt wird.

5. Verfahren nach einem der vorhergehenden Ansprüche,
**dadurch gekennzeichnet, dass**
ermittelt wird, ob ein Energiespeicher (5) des Fahrzeugs (7) während des zweiten Betriebsmodus aufgeladen wird, und
wenn der Energiespeicher (5) aufgeladen wird, die zeitliche Entwicklung des Ladezustands (16) des Energiespeichers (5) prognostiziert wird und in der Prognose der zeitlichen Entwicklung der Reichweite (R) berücksichtigt wird.

6. Verfahren nach Anspruch 5,
**dadurch gekennzeichnet, dass**
eine Soll-Energiemenge ermittelt wird, welche der Energiespeicher (5) des Fahrzeugs (7) zu dem weiteren Zeitpunkt (t₂) aufweisen soll,
ein Soll-Zeitpunkt (t₃) ermittelt wird, zu welchem ein Ladevorgang zum Laden des Energiespeichers (5) gestartet werden muss, um die Soll-Energiemenge zu dem weiteren Zeitpunkt (t₂) bereitzustellen, und
der Soll-Zeitpunkt (t₃) ausgegeben wird.

7. Verfahren nach einem der vorhergehenden Ansprüche
**dadurch gekennzeichnet, dass**
die zeitliche Auflösung der bestimmten Dauer (t) abhängig von der zeitlichen Auflösung des Parameters ist.

8. Verfahren nach einem der vorhergehenden Ansprüche,
**dadurch gekennzeichnet, dass**
auf einer Anzeigefläche (2) eine graphische Darstellung (12) erzeugt wird, mittels welcher die zeitliche Entwicklung der Reichweite (R) ausgegeben wird.

9. Verfahren nach Anspruch 8,
**dadurch gekennzeichnet, dass**
die graphische Darstellung ein Diagramm (12) umfasst, wobei auf einer ersten Achse (x) die bestimmte Dauer (t) und auf einer zweiten Achse (y) die prognostizierte Reichweite (R) aufgetragen ist, und die prognostizierte Reichweite (R) mittels des Diagramms (12) ausgegeben wird.

10. Verfahren nach Anspruch 9,
**dadurch gekennzeichnet, dass**
die zeitliche Auflösung des Parameters die Einheit Stunden aufweist, die bestimmte Dauer (t) 24 Stunden umfasst und auf der ersten Achse (x) Uhrzeiten mit einem Abstand von jeweils einer Stunde zwischen zwei aufeinanderfolgenden Uhrzeiten aufgetragen wird.

11. Verfahren nach einem der Ansprüche 9 oder 10,
**dadurch gekennzeichnet, dass**
das graphische Diagramm (12) für jeden ausgegebenen Zeitpunkt (t₂, t₃, t₄) ein graphisches Element (15.1 bis 15.3) aufweist.

12. Verfahren nach Anspruch 11,
**dadurch gekennzeichnet, dass**
zumindest eines der graphischen Elemente (15.1 bis 15.3) in dem Diagramm (12) entlang der ersten Achse (x) verschiebbar ist, so dass der Zeitpunkt (t₂ bis t₄) mittels Verschieben des graphischen Elements (15.1 bis 15.3) einstellbar ist.

13. Vorrichtung (1) zum Prognostizieren einer Reichweite (7) eines Fahrzeugs (7) mit zumindest teilweise elektrischem Antrieb mit
einer Erfassungseinheit (8), mittels welcher erfassbar ist, wenn zu einem Zeitpunkt (t₁) ein erster Betriebsmodus des Fahrzeugs (7) beendet wird, wobei das Fahrzeug (7) bei Beendigung des ersten Betriebsmodus in einen zweiten Betriebsmodus wechselt, **dadurch gekennzeichnet, dass**
sich das Fahrzeug (7) im ersten Betriebsmodus in einem Fahrmodus und im zweiten Betriebsmodus in einem Ruhemodus befindet,
mittels einer Ermittlungseinheit (4) die Reichweite (R) des Fahrzeugs (7) bei Beendigung des Fahrmodus und ab dem Zeitpunkt (t₁) der Beendigung des Fahrmodus die zeitliche Entwicklung eines Parameters aus der Umgebung des Fahrzeugs (7) für eine bestimmte Dauer (t) ermittelbar ist, wobei sich das Fahrzeug (7) während der bestimmten Dauer (t) zumindest teilweise in dem Ruhemodus befindet,
mittels einer Prognoseeinheit (3) in Abhängigkeit von der Reichweite (R) bei Beendigung des Fahrmodus und der zeitlichen Entwicklung des Parameters die zeitliche Entwicklung der Reichweite (R) für die bestimmte Dauer (t) prognostizierbar ist und
mittels einer Ausgabeeinheit die prognostizierte zeitliche Entwicklung der Reichweite (R) ausgebbar ist.

14. Fahrzeug (7) mit zumindest teilweise elektrischem Antrieb mit einer Vorrichtung nach Anspruch 13.

## Claims

1. Method for predicting a range of a vehicle (7) comprising an at least partially electric drive, in which
it is detected when a first operating mode of the vehicle (7) is ended at a time (t₁), wherein the vehicle (7) switches into a second operating mode when the first operating mode ends,
the range (R) of the vehicle (7) is determined when the first operating mode ends,
**characterized in that**
the vehicle is in a driving mode when in the first operating mode and is in a resting mode when in the second operating mode,
starting at the time (t₁) at which the driving mode ends, the temporal development of a parameter from the surroundings of the vehicle (7) is determined for a certain duration (t), wherein the vehicle (7) is in the resting mode for at least a portion of the certain duration (t),
the temporal development of the range (R) is predicted for the certain duration (t) as a function of the range (R) when the driving mode ends and as a function of the temporal development of the parameter, and
the temporal development of the range (R) is output.

2. Method according to Claim 1,
**characterized in that** a further time (t₂) is determined, at which the switch from the second operating mode to the first operating mode is likely to take place, and the further time (t₂) is output.

3. Method according to either of Claims 1 and 2, **characterized in that**
the parameter includes weather conditions in the surroundings of the vehicle (7) and a weather forecast for the certain duration (t) is determined as the temporal development.

4. Method according to Claim 3,
**characterized in that**
the position of the vehicle (7) in the second operating mode is determined and the weather forecast for the position of the vehicle (7) is determined.

5. Method according to one of the preceding claims, **characterized in that**
it is determined whether an energy accumulator (5) of the vehicle (7) is charged during the second operating mode, and
if the energy accumulator (5) is charged, the temporal development of the state of charge (16) of the energy accumulator (5) is predicted and is taken into account in the prediction of the temporal development of the range (R).

6. Method according to Claim 5,
**characterized in that**
a target energy quantity is determined, which the energy accumulator (5) of the vehicle (7) should have at the further time (t₂),
a target time (t₃) is determined, at which a charging process for charging the energy accumulator (5) must be started in order to provide the target energy quantity at the further time (t₂), and
the target time (t₃) is output.

7. Method according to one of the preceding claims, **characterized in that**
the temporal resolution of the certain duration (t) is dependent upon the temporal resolution of the parameter.

8. Method according to one of the preceding claims, **characterized in that**
a graphic depiction (12) is generated on a display panel (2), by means of which the temporal development of the range (R) is output.

9. Method according to Claim 8,
**characterized in that**
the graphic depiction comprises a diagram (12), wherein the certain duration (t) is plotted on a first axis (x) and the predicted range (R) is plotted on a second axis (y), and the predicted range (R) is output by means of the diagram (12).

10. Method according to Claim 9,
**characterized in that**
the temporal resolution of the parameter has the unit "hours", the certain duration (t) comprises 24 hours, and times of day having an interval of one hour between each of two consecutive times of day are plotted on the first axis (x).

11. Method according to either of Claims 9 and 10, **characterized in that**
the graphic diagram (12) has a graphic element (15.1 to 15.3) for each output time (t₂, t₃, t₄).

12. Method according to Claim 11,
**characterized in that**
at least one of the graphic elements (15.1 to 15.3) in the diagram (12) is movable along the first axis (x), so that the time (t₂ to t₄) can be set by moving the graphic element (15.1 to 15.3).

13. Device (1) for predicting a range (7) of a vehicle (7) comprising an at least partially electric drive, having
a detection unit (8), by means of which it is detected when a first operating mode of the vehicle (7) is ended at a time (t₁), wherein the vehicle (7) switches into a second operating mode when the first operating mode ends,
**characterized in that**
the vehicle (7) is in a driving mode when in the first operating mode and is in a resting mode when in the second operating mode,
the range (R) of the vehicle (7) can be determined by means of a determination unit (4) when the driving mode ends and, starting at the time (t₁) when the driving mode ends, the temporal development of a parameter from the surroundings of the vehicle (7) can be determined for a certain duration (t), wherein the vehicle (7) is in the resting mode for at least a portion of the certain duration (t),
the temporal development of the range (R) can be predicted by means of a prediction unit (3) for the certain duration (t) as a function of the range (R) when the driving mode ends and as a function of the temporal development of the parameter, and
the predicted temporal development of the range (R) can be output by means of an output unit.

14. Vehicle (7) comprising an at least partially electric drive having a device according to Claim 13.

## Revendications

1. Procédé permettant de pronostiquer une autonomie d'un véhicule (7) doté d'un entraînement au moins partiellement électrique, dans lequel
il est détecté si un premier mode de fonctionnement du véhicule (7) est terminé à un instant (t₁), le véhicule (7) passant à un deuxième mode de fonctionnement à la fin du premier mode de fonctionnement,
l'autonomie (R) du véhicule (7) à la fin du premier mode de fonctionnement est déterminée,
**caractérisé en ce que**
le véhicule se trouve dans un mode de conduite dans le premier mode de fonctionnement, et se trouve dans un mode de repos dans le deuxième mode de fonctionnement,
à partir de l'instant (t₁) de la fin du mode de conduite, l'évolution dans le temps d'un paramètre provenant de l'environnement du véhicule (7) est déterminée pendant une durée déterminée (t), le véhicule (7) se trouvant au moins en partie en mode de repos pendant la durée déterminée (t),
en fonction de l'autonomie (R) à la fin du mode de conduite et de l'évolution dans le temps du paramètre, l'évolution dans le temps de l'autonomie (R) est pronostiquée pour la durée déterminée (t), et
l'évolution dans le temps de l'autonomie (R) est émise.

2. Procédé selon la revendication 1, **caractérisé en ce qu'**un autre instant (t₂) est déterminé auquel il y aura probablement un passage du deuxième mode de fonctionnement au premier mode de fonctionnement, et l'autre instant (t₂) est émis.

3. Procédé selon l'une quelconque des revendications 1 et 2, **caractérisé en ce que** le paramètre comprend des conditions météorologiques dans l'environnement du véhicule (7), et un pronostic météorologique est déterminé pour la durée déterminée (t) en tant qu'évolution dans le temps.

4. Procédé selon la revendication 3, **caractérisé en ce que** la position du véhicule (7) dans le deuxième mode de fonctionnement est déterminée, et le pronostic météorologique est déterminé pour la position du véhicule (7).

5. Procédé selon l'une quelconque des revendications précédentes, **caractérisé en ce que**
il est déterminé si un accumulateur d'énergie (5) du véhicule (7) est rechargé pendant le deuxième mode de fonctionnement, et
si l'accumulateur d'énergie (5) est rechargé, l'évolution dans le temps de l'état de charge (16) de l'accumulateur d'énergie (5) est pronostiqué et est pris en compte pour le pronostic de l'évolution dans le temps de l'autonomie (R).

6. Procédé selon la revendication 5, **caractérisé en ce que**
une quantité d'énergie de consigne est déterminée dont l'accumulateur d'énergie (5) du véhicule (7) doit disposer à l'autre instant (t₂),
un instant de consigne (t₃) est déterminé auquel une opération de charge doit être lancée pour charger l'accumulateur d'énergie (5) afin de fournir la quantité d'énergie de consigne à l'autre instant (t₂), et
l'instant de consigne (t₃) est émis.

7. Procédé selon l'une quelconque des revendications précédentes, **caractérisé en ce que** la résolution temporelle de la durée déterminée (t) dépend de la résolution temporelle du paramètre.

8. Procédé selon l'une quelconque des revendications précédentes, **caractérisé en ce qu'**une représentation graphique (12) permettant d'émettre l'évolution dans le temps de l'autonomie (R) est générée sur une surface d'affichage (2).

9. Procédé selon la revendication 8, **caractérisé en ce que** la représentation graphique comprend un diagramme (12), dans lequel la durée déterminée (t) est reportée sur un premier axe (x), et l'autonomie pronostiquée (R) est reportée sur un deuxième axe (y), et l'autonomie pronostiquée (R) est émise au moyen du diagramme (12).

10. Procédé selon la revendication 9, **caractérisé en ce que** la résolution temporelle du paramètre présente l'unité heure, la durée déterminée (t) comprend 24 heures, et sur le premier axe (x), les heures sont reportées avec un intervalle d'une heure respectivement entre deux heures successives.

11. Procédé selon l'une quelconque des revendications 9 et 10, **caractérisé en ce que** le diagramme graphique (12) présente un élément graphique (15.1 à 15.3) pour chaque instant sorti (t₂, t₃, t₄).

12. Procédé selon la revendication 11, **caractérisé en ce qu'**au moins l'un des éléments graphiques (15.1 à 15.3) peut être déplacé le long du premier axe (x) sur le diagramme (12), de sorte que l'instant (t₂ à t₄) est réglable par un déplacement de l'élément graphique (15.1 à 15.3).

13. Dispositif (1) permettant de pronostiquer une autonomie (7) d'un véhicule (7) doté d'un entraînement au moins partiellement électrique, comprenant
une unité de détection (8) permettant de détecter si à un instant (t₁), un premier mode de fonctionnement du véhicule (7) est terminé, le véhicule (7) passant à un deuxième mode de fonctionnement à la fin du premier mode de fonctionnement,
**caractérisé en ce que**
le véhicule (7) se trouve dans un mode de conduite dans le premier mode de fonctionnement, et se trouve dans un mode de repos dans le deuxième mode de fonctionnement,
une unité de détermination (4) permet de déterminer l'autonomie (R) du véhicule (7) à la fin du mode de conduite, et à partir de l'instant (t₁) de la fin du mode de conduite, de déterminer l'évolution dans le temps d'un paramètre provenant de l'environnement du véhicule (7) pour une durée déterminée (t), le véhicule (7) se trouvant au moins en partie dans le mode de repos pendant la durée déterminée (t),
une unité de pronostic (3) permet de pronostiquer l'évolution dans le temps de l'autonomie (R) pour la durée déterminée (t) en fonction de l'autonomie (R) à la fin du mode de conduite et de l'évolution dans le temps du paramètre, et
une unité de sortie permet d'émettre l'évolution dans le temps pronostiquée de l'autonomie (R).

14. Véhicule (7) doté d'un entraînement au moins partiellement électrique, comprenant un dispositif selon la revendication 13.
